# EUROPÄISCHE PATENTSCHRIFT

(11) **EP 0 406 801 B1**
(45) Veröffentlichungstag und Bekanntmachung des Hinweises auf die Patenterteilung: **20.10.1993**
(21) Anmeldenummer: 90112681.3
(22) Anmeldetag: 03.07.1990
(51) Int. Cl.: F16B 37/06

(54) **Befestigungselement**
Fixing device
Dispositif de fixation

(30) Priorität: 04.07.1989 DE 8908137 U
(43) Veröffentlichungstag der Anmeldung: 09.01.1991
(73) Patentinhaber: HERBERT SCHRUFF GMBH, D-54411 Hermeskeil (DE)
(72) Erfinder: Schruff, Herbert, D-5500 Trier (DE)
(74) Vertreter: Grünecker, Kinkeldey, Stockmair & Schwanhäusser Anwaltssozietät

(56) Entgegenhaltungen:
- DE-A- 2 520 586
- DE-U- 8 519 745
- DE-U- 8 908 137
- FR-A- 2 302 441

## Beschreibung

Die Erfindung bezieht sich auf ein Befestigungselement gemäß dem Oberbegriff des Anspruchs 1. Ein derartiges Befestigungselement ist aus der DE-A-2520586 A1 bekannt. Es besteht aus einer zylindrischen Stauchhülse mit einem flanschartig ausgebildeten Ende und einem in dieser angeordneten zylindrischen Einsatzteil mit einem flanschartigen Kopf. Der Außendurchmesser des flanschartigen Kopes ist gleich dem Außendurchmesser der Stauchhülse, wobei die Unterseite des Kopfes des Einsatzteils mit der angrenzenden Stirnfläche der Stauchhülse durch unmittelbare Berührung druckübertragend in Verbindung steht. Die Stauchhülse ist durch Axialzug am Einsatzteil wulstartig verformbar. Zwischen dem äußeren Umfang des zylindrischen Einsatzteils und dem inneren Umfang der Stauchhülse besteht in deren Endbereich eine Materialschlußverbindung durch Punktschweißung. Das Befestigungselement sitzt an dem Material, an dem es zu befestigen ist, in einem Rundloch und weist somit keine Sicherung gegen Verdrehung auf. Außerdem ist es erforderlich, daß durch die Aufwerfungen an den Punktschweißstellen größere Durchgangsbohrungen in dem Werkstück vorgesehen sein müssen, als für die Einführung der Stauchhülse eigentlich erforderlich wäre.

Aus der FR-A-2302441 A1 ist ferner eine Einnietmutter zum Einsetzen in eine Durchgangsbohrung eines Werkstückes bekannt. Im Bereich der Durchgangsbohrung des Werkstücks weist die Einnietmutter einen polygonalen Querschnitt auf, an den sich ein Rundschaftabschnitt anschließt, an dessen Ende ein Innengewinde vorgesehen ist. Eine ähnliche Mutter ist aus der DE-A-8519745 U bekannt.

Der Erfindung liegt die Aufgabe zugrunde, ein Befestigungselement der eingangs genannten Art zu schaffen, das einerseits drehsicher an einem Werkstück angebracht werden kann, wobei andererseits die Durchgangsbohrung nicht größer sein muß als der Außendurchmessr des Befestigungselementes.

Diese Aufgabe wird erfindungsgemß dadurch gelöst, daß die Stauchhülse im Bereich der Materialschlußverbindung einen Rundschaftabschnitt aufweist und im Bereich ihrer Verformung mit einem Vieleckabschnitt zum Einsetzen in eine entsprechend große Vieleckbohrung des Werkstücks versehen ist, wobei die durch die Punktschweißung verursachten Aufwerfungen der Stauchhülse derart angeordnet sind, daß sie bei entsprechender Drehstellung der Stauchhülse durch die Vieleckbohrung hindurchführbar sind.

In vorteilhafter Weise können dabei die Punktschweißungen in zwei senkrecht zueinander verlaufenden Ebenen an vier Stellen durchgeführt werden. Als zweckmäßig hat es sich erwiesen, wenn der Rundschaftabschnitt der Stauchhülse mindestens 3 bis 3,5 mm lang ist, während die axiale Erstreckung des Vieleckabschnitts der Stauchhülse etwa 3 mm dicker sein kann als die vorgesehene Materialstärke des Werkstücks. Ferner kann das Einsatzteil vorteilhaft als Gewindebolzen oder Gewindehohlzylinder ausgebildet sein.

In den Zeichnungen zeigen:
- **Fig. 1**: eine erfindungsgemäße Stauchhülse teilweise im Schnitt dargestellt,
- **Fig.2**: das Befestigungselement mit Gewindebolzen in (es folgt: Seite 3 der ursprünglichen Beschreibung) seiner Festlegung an einem Werkstück und
- Fig. 3: die Drehstellung des Rundschaftabschnitts des Eingangsteils in Bezug auf ein Sechskantloch im Werkstück.

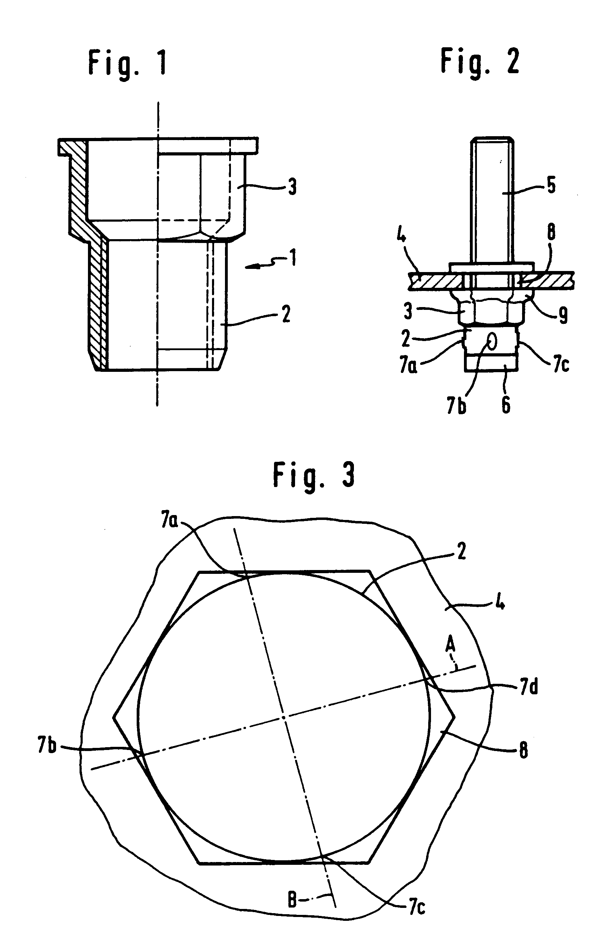

In Fig. 1 ist eine Stauchhülse 1 eines erfindungsgemäßen Befestigungselements dargestellt. Die Stauchhülse 1 weist einen Rundschaftabschnitt 2 und einen Sechskantabschnitt 3 auf. Der Sechskantabschnitt 3 kann statt aus einem Sechskant auch aus einem anderen Vielkant bestehen entsprechend einem in einem Werkstück 4 vorgesehenen Vielkantloch.

Wie aus Fig. 2 zu entnehmen ist, ist in der Stauchhülse 1 ein Gewindebolzen 5 angeordnet mit einem Kopf 6, wobei der Außendurchmesser des Kopfes 6 gleich dem Außendurchmesser der Stauchhülse 1 ist. Der Rundschaftabschnitt 2 ist im Bereich der Materialschlußverbindung vorgesehen, in dem Punktschweißverbindungen 7a, 7b, 7c angebracht sind.

In Fig. 3 ist gezeigt, wie die Punktschweißverbindungen in zwei senkrecht aufeinander laufenden Ebenen A und B an den vier Stellen 7a bis 7c durchgeführt sind. Durch Drehung des Rundschaftabschnitts 2 in Bezug auf das im Werkstück 4 angebrachte Sechskantloch 8 in der in Fig. 3 dargestellten Drehstellung können die an den Punktschweißstellen 7a bis 7d auftretenden Vierpunktaufwerfungen das Sechskantloch 8 passieren. Auf diese Weise ist es nicht erforderlich, das Sechskantloch 8 größer vorzusehen, als es zur Festlegung der Stauchhülse 1 des Befestigungselementes erforderlich ist.

Wie wieder aus Fig. 3 zu entnehmen ist, entsteht nach Einführung des Befestigungselements mit der Stauchhülse 1 und dem darin festgelegten Gewindebolzen 5 durch das Sechskantloch 8 im Werkstück 4 nach Ausübung einer Zugkraft auf den Gewindebolzen im Sechskantabschnitt 3 im Bereich seiner Verformung eine Wulst 9, wodurch das Befestigungsteil festgelegt wird. Der Rundschaftabschnitt 2 weist eine axiale Länge von mindestens 3 bis 3,5 mm auf, die erforderlich ist, um die Punktschweißstellen 7a bis 7d anzubringen. Hinsichtlich der axialen Erstreckung des Sechskantabschnitts 3 bestehen keine besonderen Erfordernisse, sie richtet sich nach der Dicke des Werkstücks 4. In der Regel ist die axiale Erstreckung des Sechskantabschnitts 3 etwa 3 mm größer als die Materialstärke des Werkstücks 4.

In der Stauchhülse 1 kann anstelle des in Fig. 2 dargestellten Gewindebolzens 5 auch ein Gewindehohlzylinder angebracht werden.

Auf diese Art und Weise ist in überraschender Weise ein Befestigungselement verfügbar gemacht, das eine Sicherung gegen Drehung im Werkstück 4 aufweist und trotz der beim Verschweißen am Rundschaft 2 auftretenden Vierpunktverwerfungen kein wesentlich größeres Loch 8 im Werkstück erfordert als der Außendurchmesser der Stauchhülse 1.

## Patentansprüche

1. Befestigungselement zum Befestigen insbesondere an nur einseitig zugänglichen Durchgangsbohrungen (8) eines Werkstücks (4), bestehend aus einer zylindrischen Stauchhülse (1) mit einem flanschartig ausgebildeten Ende und einem in dieser angeordneten zylindrischen Einsatzteil (5) mit einem flanschartigen Kopf (6), dessen Außendurchmesser gleich dem Außendurchmesser der Stauchhülse (1) ist, wobei der Kopf (6) des Einsatzteils mit der angrenzenden Stirnfläche der Stauchhülse (1) durch unmittelbare Berührung druckübertragend in Verbindung steht und die Stauchhülse (1) durch Axialzug am Einsatzteil (5) wulstartig verformbar ist, wobei zwischen dem äußeren Umfang des zylindrischen Einsatzteils (5) und dem inneren Umfang der Stauchhülse (1) im Endbereich derselben eine Materialschlußverbindung durch Punktschweißung besteht, **dadurch gekennzeichnet,** daß die Stauchhülse (1) im Bereich der Materialschlußverbindung (7) einen Rundschaftabschnitt (2) aufweist und im Bereich ihrer Verformung (9) mit einem Vieleckabschnitt (3) zum Einsetzen in eine entsprechend große Vieleckbohrung (8) des Werkstücks (4) versehen ist, wobei die durch die Punktschweißung verursachten Aufwerfungen (7a-7d) der Stauchhülse (1) derart angeordnet sind, daß sie bei entsprechender Drehstelllung der Stauchhülse (1) durch die Vieleckbohrung (8) hindurchführbar sind.

2. Befestigungselement nach Anspruch 1, **dadurch** **gekennzeichnet,** daß die Punktschweißungen (7a-7d) in zwei senkrecht zueinander verlaufenden Ebenen (A, B) an vier Stellen durchgeführt sind.

3. Befestigungselement nach Anspruch 1 oder 2, **dadurch** **gekennzeichnet,** daß der Rundschaftabschnitt (2) der Stauchhülse (1) eine axiale Länge von mindestens 3 bis 3,5 mm aufweist.

4. Befestigungselement nach einem der Ansprüche 1 bis 3, **dadurch gekennzeichnet,** daß der Vieleckabschnitt (3) als Sechskant ausgebildet ist und die axiale Erstreckung des Vieleckabschnitts (3) der Stauchhülse (1) etwa 3 mm größer ist als die Materialstärke des Werkstücks (4).

5. Befestigungselement nach einem der Ansprüche 1 bis 4, **dadurch gekennzeichnet,** daß das Einsatzteil als Gewindebolzen (5) oder Gewindehohlzylinder ausgebildet ist.

## Claims

1. A securing element, more particularly for securing to through bores (8) accessible on only one side of a workpiece (4), the element comprising a cylindrical compressible sleeve (1) having a flange-like end and a cylindrical insertion part (5) disposed in the end and having a flange-like head (6), the outer diameter of which is equal to the outer diameter of the compressible sleeve (1), the head (6) of the insertion part being connected to the adjacent end face of the compressible sleeve (1) so as to transmit pressure by direct contact, and the sleeve (1) being deformable into a bead by axial tension at the insertion part (5), a material connection by spot welding being provided between the outer periphery of the cylindrical insertion part (5) and the inner periphery of the sleeve (1) in the end region thereof, characterised in that the sleeve (1) has a round shank portion (2) in the region of the material connection (7) and has a polygonal portion (3) in the deformed region (9) for insertion into a corresponding-sized polygonal bore (8) in the workpiece (4), the raised portions (7a - 7d) of the sleeve (1) caused by spot welding being so disposed that when the sleeve (1) is rotated into the right position they can be inserted through the polygonal bore (8).

2. An element according to claim 1, characterised in that the spot welds (7a - 7d) are made at four places in two perpendicular planes (A, B).

3. An element according to claim 1 or 2, characterised in that the round shank portion (2) of the sleeve (1) has an axial length of at least 3 to 3.5 mm.

4. A securing element according to any of claims 1 to 3, characterised in that the polygonal portion (3) is a hexagon and the axial extent of the polygonal portion (3) of the sleeve (1) is about 3 mm greater than the thickness of the material of the workpiece (4).

5. A securing element according to any of claims 1 to 4, characterised in that the insertion part is a threaded bolt (5) or threaded hollow cylinder.

## Revendications

1. Elément de fixation d'un organe, en particulier dans des ouvertures (8) accessibles uniquement d'un seul côté et qui sont ménagées dans une pièce (4), du genre se composant d'une douille cylindrique déformable par compression (1) ayant une extrémité configurée en forme de collerette ainsi que d'une pièce d'insertion cylindrique (5) disposée dans cette douille et présentant une tête (6) en forme de bride, dont le diamètre extérieur est égal au diamètre extérieur de la douille (1), la tête (6) étant en appui contre la surface frontale adjacente de la douille (1) par contact direct pour la transmission de la pression tandis que la douille (1) est propre à être déformée sous la forme d'un bourrelet par une traction axiale sur la pièce d'insertion (5), entre la périphérie extérieure de la pièce d'insertion cylindrique (5) et la périphérie intérieure de la douille (1) se trouvant un assemblage effectué par soudure par points dans leur zone d'extrémité, caractérisé en ce que la douille déformable (1) présente dans la zone de l'assemblage (7) un segment tubulaire à section circulaire (2) et en ce que, dans sa zone de déformation (9) elle est munie d'une partie polygonale (3) destinée à être introduite dans un trou polygonal (8) de taille correspondante de la pièce (4), les saillies (7a à 7d) de la douille (1) provoquées par le soudage par points étant disposées de telle manière que, dans le cas d'une position angulaire correspondante de la douille (1), ils puissent pénétrer dans le trou polygonal (8).

2. Elément de fixation selon la revendication 1, caractérisé en ce que les soudures par point (7a à 7d) sont exécutées en quatre emplacements dans deux plans (A, B) s'étendant perpendiculairement l'un à l'autre.

3. Elément de fixation selon la revendication 1 ou 2, caractérisé en ce que le segment tubulaire (2) de la douille (1) présente une longueur axiale d'au moins 3 à 3,5 mm.

4. Elément de fixation selon l'une quelconque des revendications 1 à 3, caractérisé en ce que la partie polygonale (3) affecte la forme d'un hexagone et en ce que la longueur axiale de la partie polygonale (3) de la douille (1) est d'environ 3 mm supérieure à l'épaisseur de la pièce (4).

5. Element de fixation selon l'une quelconque des revendications 1 à 4, caractérisé en ce que la pièce d'insertion est réalisée sous la forme d'un goujon fileté (5) ou d'un cylindre creux fileté.
